# EUROPEAN PATENT APPLICATION

(11) **EP 0 860 967 A1**
(43) Date of publication of application: **26.08.1998**
(21) Application number: 98300950.7
(22) Date of filing: 10.02.1998
(51) Int. Cl.: H04L 29/06, H04M 3/36

(54) **Technique for detecting modem devices to enhance computer network security**

(30) Priority: 20.02.1997 US 804093
(71) Applicant: LUCENT TECHNOLOGIES INC., Murray Hill, New Jersey 07974-0636 (US)
(72) Inventor: Cheswick, William Roberts, Bernardsville, New Jersey 07924 (US)
(74) Representative: Buckley, Christopher Simon Thirsk

(57) **Abstract**

In a technique for the identification of unauthorized modems operating within a particular telecommunications environment a telecommunications switch is adapted to monitor the use of modems on the individual telephone lines emanating from a particular premise. The telecommunications switch detects certain characteristics indicative of modem communications across telephone lines by identifying certain signals used, for example, in standard modem communications. For example, such signals could be those as established by industry data communications standards which specify standard signals, tones, handshaking, or other protocols for initiating, continuing and ending communications between modems. Advantageously, a telecommunications service provider uses their telecommunications equipment to generate, for example, periodic reports which identify those telephone numbers from particular customer premises which exhibit modem communications. Thus, the telecommunications and computer system administrators of the customer can readily determine, directly from the report, which telephone numbers have unauthorized modem connections which pose potential computer network security risks.

## Description

### Field of the Invention

The present invention relates to computer network security and, more particularly, to the identification of unauthorized modems present within a particular telecommunications environment which pose potential risks to computer network security.

### Background of the Invention

Advances in communications technology and the availability of powerful desktop computer hardware has increased the use of computers to access a variety of publicly available computer networks. The speed of modems, which are well known communication devices used for transforming a digital bit stream into an analog signal, has significantly increased, allowing for the high-speed exchange of information across, for example, the public switched telephone network (PSTN). Today, a tremendous amount of information is exchanged between individual users located around the world via public computer networks, e.g., the Internet. These users are both private individuals and professional users located within, for example, a corporation. The exchange of information between private and public computer networks has presented a critical security issue for the protection of information on the private computer networks and the overall functionality of the private computer network itself. Numerous well publicized accounts exist of individuals known as "hackers" who have improperly breached the security of private computer networks and caused severe damage. Such damage has included the destruction of electronic files, alteration of databases, or the introduction of computer viruses which affect the operability of the computer network or computer hardware connected to the network.

System administrators responsible for the operation of private computer networks employ a variety of security measures to protect the network from external security breaches. One technique uses so called host-based firewalls. This security scheme essentially places a separate computer system (i.e., the firewall) between the private network and the public network (e.g., the Internet). The firewall maintains control over communications from and to the private network. Essentially, the firewall imposes certain security measures on all users employing the private network. For example, firewalls may block access to new Internet services or sites because the security consequences are unknown or not accounted for by the present firewall configuration.

One issue which arises when a firewall arrangement is employed is that certain users within the private network become frustrated or annoyed by the presence of the firewall and the security framework imposed within the network. As a result, individual users within a firewall-protected facility sometimes circumvent the firewall by installing separate modems on their computers and thereby access public networks via a conventional telephone connection. Such a connection to the public network is completely outside the firewall's safeguards and presents a potential point for a security breach into the private network by a hacker or other unauthorized user.

A need exists therefore to readily identify unauthorized modems within a particular telecommunications environment which circumvent established firewall security measures in order to safeguard private computer networks.

### Summary of the Invention

The present invention provides a tool useful in the detection and identification of unauthorized modems operating within a telecommunications environment, for example, a major facility of a corporation. In accordance with the invention, individual ones of a plurality of telephone lines emanating from a particular premise are monitored for modem traffic and reports identifying the originating telephone numbers are generated.

The generated reports are customer and telephone-line-specific thereby providing a concise indication of potentially unauthorized modem usage. Thus, the telecommunications and computer system administrators of the customer can readily determine, directly from the report, which telephone numbers have unauthorized modem connections which pose potential computer network security risks. Advantageously, the availability of such a report from the telecommunications service provide eliminates the burden of the local telecommunications and computer system administrators to devise a local procedure to identify the location of unauthorized modems. Thus, the risk of security breaches to the private computer networks of the customer are significantly reduced.

In preferred embodiments of the invention, telecommunications equipment used for routing telephone calls, e.g., a telecommunications switch, is adapted to detect the use of modems on individual telephone lines emanating from a particular premise. For example, a telecommunications service provider uses their telecommunications equipment to generate, for example, periodic reports which identify those telephone numbers from particular customer premises which exhibit modem communications. The telecommunications switch detects modem communications across particular telephone lines by detecting particular signals having characteristics which are indicative of modem communications. For example, such modem-generated signals could be those as established by modem industry standards which specify standard signals, tones, handshaking, or other protocols for initiating, continuing and ending communications between modems.

Network-based modem-monitoring techniques are not new. For example, U.S. patent no. 5,490,199, issued to Fuller et al. on February 6, 1996, describes a system for identifying facsimile transmissions, which are carried out between modems, in selected portions of the total communications traffic on a network and for performing certain measurements and analysis on the identified facsimile transmissions flowing in the network used for ascertaining the extent to which successful facsimile service is being accomplished on the network. It has, however, remained for the inventor herein to recognize that the combination of monitoring the telephone traffic from a premise to identify the originating telephone numbers of modem calls, with the generation of a report identifying those telephone numbers provides an elegant tool by which those responsible for security within the premise can reduce the risk of computer security breaches.

### Brief Description of the Drawings

FIG. 1 shows a typical public switched telephone network;
FIG. 2 is a block diagram of the central office switch shown in FIG. 1;
FIG. 3 is a block diagram of the switch module shown in FIG. 2 configured to provide the modem monitoring and detection pursuant to the invention;
FIG. 4 is a block diagram of the modem line identification unit shown in FIG. 3;
FIG. 5 is a flow diagram of operations performed by the central office switch shown in FIG. 2 in the course of carrying out the invention; and
FIG. 6 is an illustrative customer modem line identification report generated in accordance with the principles of the invention.

### Detailed Description

The present invention is directed to the detection and identification of presumptively unauthorized modems operating within a telecommunications environment and generating a report identifying the modems which can be used by telecommunications and/or computer system administrators to readily identify and disconnect unauthorized modems. Thus, the risk of security breaches to the private computer networks of the customer are significantly reduced.

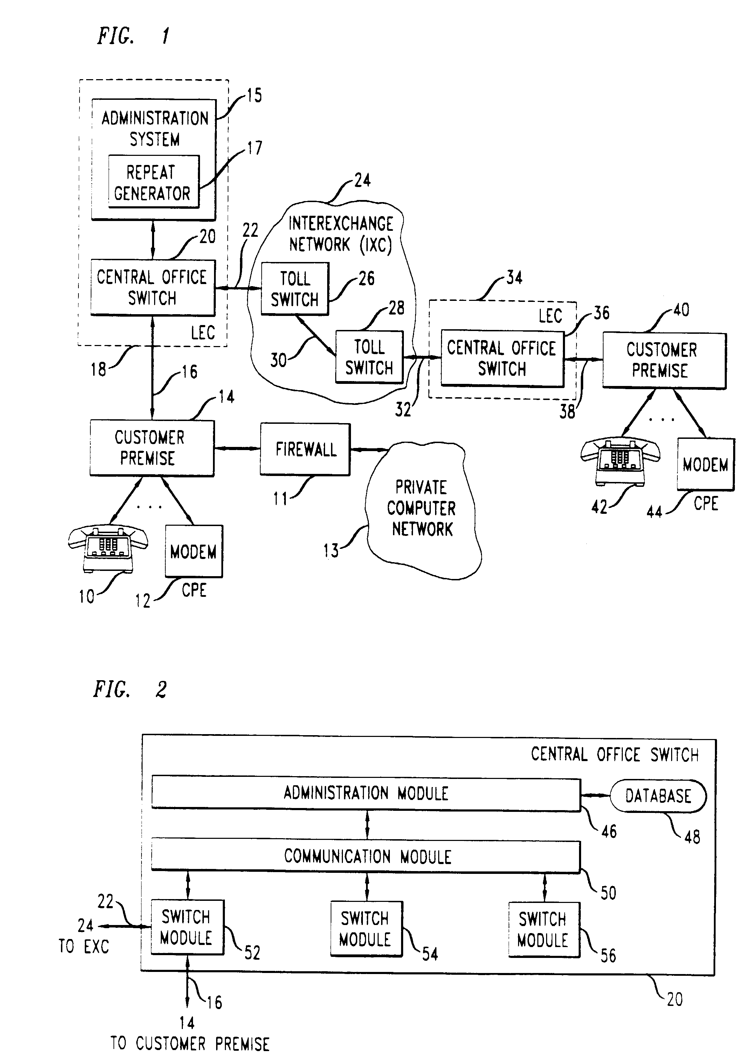

In accordance with the preferred embodiment of the invention, telecommunications equipment used for routing telephone calls, e.g., a telecommunications switch, is adapted to detect the use of modems on individual telephone lines emanating from a particular premise. FIG. 1 illustrates a typical public switched telephone network (PSTN) which is one environment within which the advantages of the present invention are realized. A customer premise 14, e.g., a corporate headquarters building, has a number of pieces of customer premises equipment (CPE) such as telephone 10 and modem 12 located on-site. Such CPE are normally authorized for connection by system administrators working within customer premise 14 which allows for the uniform installation and control of CPE throughout the premise. In addition to the CPE, customer premise 14 has private computer network 13 for which firewall 11 provides network security features to prevent unauthorized access by individuals external to premise 14.

Telecommunications service for customer premise 14 is supplied using subscriber trunk 16 which forms a subscriber's loop between the various CPE and local exchange company 18 (LEC), for example, one of the Regional Bell Operating Companies (RBOC's). In the illustrative arrangement, subscriber trunk 16 provides a plurality of telephone line connections with LEC 18. LEC 18 comprises at least central office switch 20 and administration system 15. The LEC's central office switch 20 may be connected by a trunk 22 to an inter-exchange carrier (IXC) network 24, for example, the IXC network provided by AT&T Corp. The IXC network 24 contains toll switches 26, 28 and trunk 30 which provide telecommunications services, for example, to individuals calling from customer premise 14 to other individuals located at customer premise 40. In addition to those items already described, the illustrative PSTN also includes LEC 34 having central office switch 36 connected to toll switch 28 via trunk 32. The connection between central office switch 36 to customer premise 40 is completed through subscriber trunk 38 to CPE 42 (e.g., telephone) or CPE 44 (e.g., modem).

In accordance with the invention, LEC 20 offers customers a service of monitoring the telecommunications traffic emanating from customer premise 14 to detect and identify individual telephone numbers being used for modem communications. Additionally, the detection and identification aspects of the present invention can take place either to or from the customer premise 14. That is, the identification of individual telephone numbers being used for modem communications can occur by detecting incoming calls to the dialed number or outgoing calls from the dialed number. The manner in which this detection and identification illustratively takes place is discussed below. This service offered by LEC 20 to its customers is used to generate, for example, monthly reports which identify those telephone numbers exhibiting modem usage. These reports are sent to the customer along with a monthly billing statement or at some other predetermined time interval. In accordance with the present embodiment, such reports are generated using report generator 17 as will be further discussed below.

FIG. 2 illustrates central office switch 20 configured to provide the above-described service in accordance with the principles of the invention. Although the illustrative embodiment will be discussed in the context of central office switch 20, it will be readily apparent to those skilled in the art that the invention may also be implemented in other contexts, for example, toll switches 26 or 28 of IXC network 24, or a private branch exchange (PBX). Central office switch 20 includes an administration module 46 which provides central processor control and system functionality for the switch. Administration module 46 obtains operating system data and other operational data from database 48. Communication module 50 provides switch functionality that connects time switched (i.e., multiplexed) channels created by switch modules 52, 54 and 56.

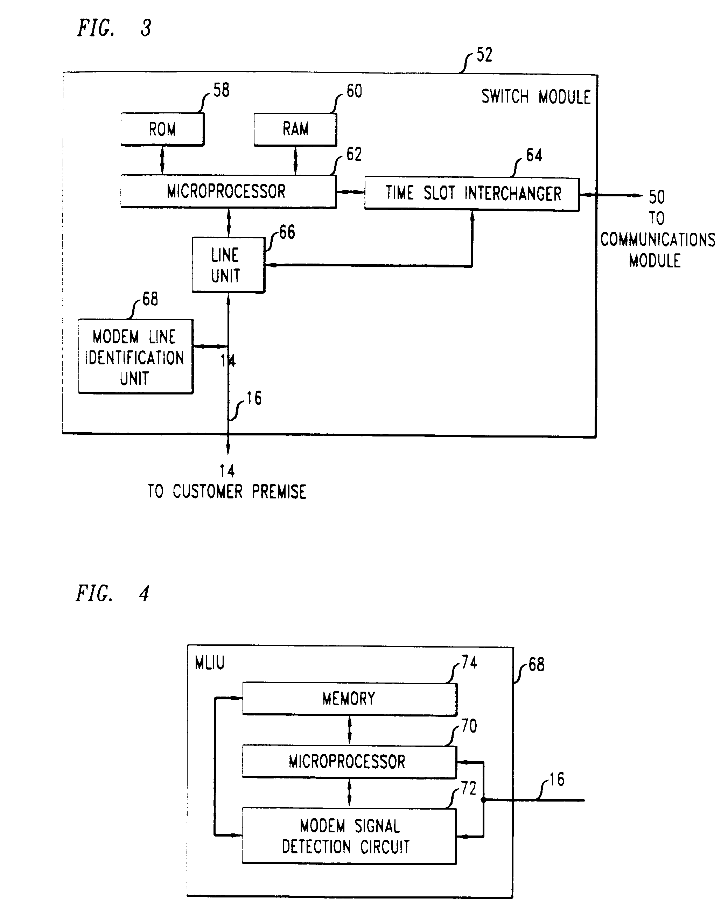

FIG. 3 shows an illustrative block diagram of switch module 52 and is representative of each switch module of central office switch 20. The switch module 52 includes a time slot interchanger 64 and line unit 66 which are both operated under the cooperative control of microprocessor 62, communication module 50 (see, FIG. 2) and administration module 46 (see, FIG. 2). As will be appreciated by those skilled in the art, the operation of these various components provide switched telecommunications to, for example, customer premise 14. Microprocessor 62 also operates in conjunction with read-only memory (ROM) 58 and random access memory (RAM) 60. The ROM 58 stores operating system data and programs and RAM 60 provides accessible memory storage which can be rapidly read from and written to by microprocessor 62.

Turning our attention briefly back to FIG. 2, database 48 is also accessed by switch module 52 (e.g., through microprocessor 62) and contains, for example, information regarding the individual telephone lines supported by switch module 52. For example, database 48 may contain information related to individual ports (i.e., communication line connection points) supported by switch module 52. More particularly, such information may be the number of ports supported, the telephone number assigned to each port and a billing number which is used to determine where service charges are to be billed for services rendered for the associated telephone number. As will be seen, such information is used in accordance with the preferred embodiment of the invention, to construct customer reports which identify those assigned telephone numbers which are being used for modem communications emanating from, for example, customer premise 14. As will be appreciated by those skilled in the art, database 48 and the information contained therein could also be provided by administrative system 15.

With particular reference to the illustrative arrangements shown in FIG. 3 and FIG. 4, the advantages of the invention may be more fully appreciated. More particularly, switch module 52 contains a modem line identification unit (MLIU) 68 for detecting and identifying signal characteristics which are indicative of the presence of modem communications traffic across, for example, subscriber trunk 16. Illustratively, an individual located at customer premise 14 has connected modem 12 on a particular telephone line supplied through subscriber trunk 16 from LEC 18 to customer premise 14 in order to access a public computer network, for example, the Internet. Such a connection is unauthorized by the local telecommunications and/or computer network system administrator of customer premise 14. Thus, this unauthorized connection is outside firewall 11 of private computer network 13 and not subject to the security protections afforded by firewall 11. The call from modem 12 is routed from customer premise 14 through subscriber trunk 16 to central office switch 20 for the continued routing through IXC network 24, and ultimately to the intended called destination on the public computer network.

As discussed previously, such an unauthorized modem connection poses certain security risks from individuals external to customer premise 14 which may result in the tampering with the private computer systems within customer premise 14. As will be appreciated by those skilled in the art and as also discussed previously, unauthorized individuals (e.g., hackers) may access such private systems through the unauthorized modem connection thereby circumventing the security features of the firewall. It is the prevention of such security breaches to which the present invention is directed through the identification of unauthorized modems connected within a telecommunications environment.

As is well known, modems are employed to transmit and receive information in digital form (e.g., bits) over voiceband communications channels. In order to facilitate communications between modems manufactured by a variety of sources, certain known industry standards exist such as CCITT V.25, V.29, V.32 and V.33 which govern the communication protocol for standard modem types. It is also known that these types of modems encode groups of one or more bits of supplied digital information into symbols at a particular symbol rate (i.e., baud rate). In accordance with the present illustrative embodiment, as a call from modem 12 is routed as described above, the MLIU 68 detects whether certain signal characteristics indicative of modem communications are present and emanating from a particular telephone line (having an assigned telephone number) across subscriber trunk 16.

FIG. 4 shows a block diagram of an illustrative arrangement for MLIU 68. In particular, MLIU 68 contains microprocessor 70, modem signal detection circuit 72 and memory 74. As will be readily apparent to those skilled in the art, the detection of the modem signal characteristics by MLIU 68 is accomplished in a variety of ways. For example, the symbol rate of an unknown modem signal can be detected to identify the presence and type of modem communications on a particular telephone line over a subscriber trunk. Such a technique is described in U.S. patent no. 4,979,211, issued to Benvenuto et al. on December 18, 1990 which is hereby incorporated by reference. Alternatively, various standard modem tones or signals used for establishing communication between modems can be detected. Such tones or signals are well known and are specified in various standards such as CCITT V.25, V.29, V.32 and V.33 as previously discussed.

Illustratively, MLIU 68 may detect whether a particular signal has characteristics indicative of modem communications when a echo suppressor (i.e., canceller) disable tone is present. Such disable tones are commonly used by voiceband digital data modems when establishing a communication link with another modem. Alternatively, MLIU 68 may detect whether a particular tone, for example, an answer tone, is present on the telephone line which is also indicative of modem communications. For example, the CCITT V.25 modem standard specifies that such a tone be a single frequency of 2100 Hz, with a minimum energy level -9 dBm. Thus, when a modem is being called from, for example, modem 12 at customer premise 14, the MLIU 68 detects the answer tone sent back from the called modem to the originating modem (e.g., modem 12). Therefore, modem signal detection circuit 72 is configurable in variety of different ways to detect the presence of modem communications. Further, after such a detection is made, memory 74 is used to record the subscriber line number, port number or other identification information specific to that particular telephone call. Thereafter, in accordance with the illustrative embodiment, MLIU 68 in conjunction with switch module 52 and database 48 identifies the assigned telephone number of the subscriber line. As mentioned previously, the detection and identification aspects of the present invention can take place either to or from, for example, the customer premise 14. That is, the identification of individual telephone numbers being used for modem communications can occur by detecting incoming calls to the dialed number or outgoing calls from the dialed number.

Advantageously, by employing the invention, the telecommunications service provider can offer additional services to their customers. In accordance with the illustrative embodiment of the invention, administrative system 15 of LEC 18 can produce a report using report generator 17. The report contains, at a minimum, a listing of each telephone number serviced from a particular customer premise for which modem usage was detected for the specified period. Such a customer report could be furnished with, for example, the customer's monthly billing statement or provided on a separate periodic basis.

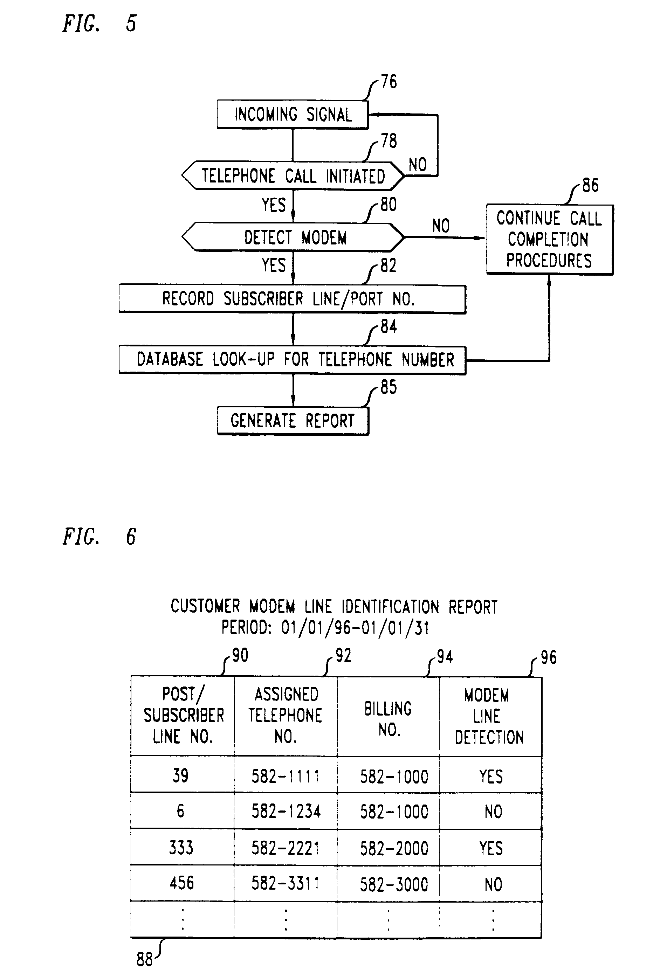

The operations associated with detecting unauthorized modems, in accordance with the illustrative embodiment of the invention, are shown in FIG. 5. Central office switch 20 makes a determination whether a telephone call (block 76) has been initiated on a subscriber line (block 78). If so, the incoming signal is tested to detect whether the signal, or a portion thereof, shows characteristics indicative of a modem communication (block 80). If not, the call completion procedures (block 86) proceed normally. If the existence of modem communications is detected, a record is made of the particular subscriber line (or port number) carrying the telephone call (block 82). Thereafter, a database look-up (block 84) is made in, for example, database 48 (see, FIG. 2) to identify the telephone number assigned to the subscriber line (or port number) of the customer. The telephone number is then stored for later use in generating the customer report (block 85) as previously discussed.

An illustrative example of such a customer modem line identification report is shown in FIG. 6. As shown, customer modem line identification report 88 contains the following illustrative information: port/subscriber number 90, assigned telephone number 92, billing number 94 and modem line detection 96. Advantageously, the customer modem line identification report 88 is used by telecommunications and/or computer system administrators to identify and disconnect unauthorized modem connections. Thus, the risk of security breaches to the private computer networks of the customer are significantly reduced. Further, the availability of such a report from the telecommunications service provide eliminates the burden of the local telecommunications and computer system administrators to devise a local procedure to identify the location of unauthorized modems. As will be appreciated by those skilled in the art, such a report may also be generated by toll switches 26 and 28 located within IXC network 24. As will also be readily apparent, the functionality provided by report generator 17 may also be incorporated directly into MLIU 68.

Additional advantages and modifications will readily occur to those skilled in the art. Therefore, the invention in its broader aspects is not limited to the specific details shown and described herein. Accordingly, various modifications may be made without departing from the spirit or scope of the general inventive concept as defined by the appended claims and their equivalents.

## Claims

1. A method implemented by telecommunications equipment which provides telecommunications services to a plurality of locations within a particular customer premise, the method comprising the step of:
generating a report which identifies any ones of the locations from which a modem call was made within a predetermined period of time.

2. The method of claim 1 wherein the report-generating step includes the step of identifying the ones of said locations by monitoring telephonic connections which are originated from the plurality of locations to detect the presence of at least one type of modem-generated signal.

3. The method of claim 1 wherein the equipment is a telecommunications switch.

4. The method of claim 2 wherein the telephonic connections are made through a subscriber trunk.

5. The method of claim 2 wherein the modem-generated signal is representative of at least one modem tone specified by a modem industry standard.

6. A method for providing telecommunications services using a telecommunications switch, the method comprising the steps of:
monitoring incoming telecommunications signals to the telecommunications switch;
detecting whether any of the incoming telecommunications signals contain characteristics indicative of communications by a modem;
performing a database query to find a telephone number associated with each of particular ones of the incoming telecommunications signals detected as containing the characteristics; and
generating a report which includes at least the telephone number associated with the particular ones of the incoming telecommunications signals containing the characteristics.

7. The method of claim 3 or 6 wherein the telecommunications switch is operated by a LEC.

8. The method of claim 6 wherein the telecommunications switch is operated in an inter-exchange carrier telecommunications network.

9. The method of claim 6 wherein the characteristics are specified by a modem industry standard.

10. The method of claim 9 wherein the incoming telecommunications signals are generated from a plurality of subscriber locations.

11. The method of claim 5 or 9 wherein the modem industry standard is selected from the group consisting of CCITT V. 25, V.29, V.32 and V.33.

12. A telecommunications switch comprising:
a plurality of switch modules, each of the switch modules receiving incoming telecommunications signal traffic from a plurality of subscriber locations, each of the subscriber locations having a plurality of telephone lines;
a database containing a listing of telephone numbers, each of the telephone lines of the subscriber locations being assigned a particular one of the telephone numbers;
a detection unit coupled to at least one of the switch modules, the detection unit being capable of detecting certain characteristics of the incoming telecommunications signal traffic which are indicative of communications by a modem and identifying particular ones of the telephone lines of the subscriber location for which modem communications are detected; and
a processor which identifies and outputs the particular one of the telephone numbers from the database assigned to each of the telephone lines of the subscriber location for which modem communications are detected.

13. The telecommunications switch of claim 12 wherein the output from the processor serves as input to a report generator which produces a report which includes at least the particular one of the telephone numbers from the database assigned to each of the telephone lines of the subscriber location for which modem communications are detected.

14. A telecommunications system comprising:
a plurality of switch modules, each of the switch modules receiving incoming telecommunications signal traffic from a plurality of subscriber locations, each of the subscriber locations having a plurality of telephone lines;
a database containing a listing of telephone numbers, each of the telephone lines of the subscriber locations being assigned a particular one of the telephone numbers;
a detection unit coupled to at least one of the switch modules, the detection unit being capable of detecting certain char!cteristics of the incoming telecommunications signal traffic which are indicative of communications by a modem and providing an identification of particular ones of the telephone lines of the subscriber location for which modem communications are detected; and
a processor which uses the identification to identify the particular one of the telephone numbers from the database assigned to the telephone line of the subscriber location for which modem communications are detected; and
a report generator which produces a report which includes at least the particular one telephone number assigned to the particular ones of the telephone lines of the subscriber location for which modem communications are detected.

15. The telecommunications system of claim 12 or 14 wherein the characteristics are representative of modem tones specified by a modem industry standard.

16. The telecommunications system of claim 15 wherein the modem industry standard is selected from the group consisting of CCITT V. 25, V.29, V.32 and V.33.

17. A method implemented by telecommunications equipment which provides telecommunications services to a plurality of locations within a particular customer premise, the method comprising the step of:
generating a report which identifies any ones of the locations from or to which a modem call was made within a predetermined period of time, wherein the report-generating step includes the step of identifying the ones of the locations by monitoring telephonic connections which are originated from the plurality of locations to detect the presence of at least one type of modem-generated signal.

18. The method of claim 2 or 17 wherein the report identifies the ones of the locations by specifying telephone numbers of telephone lines originating at those locations.
